# EUROPEAN PATENT SPECIFICATION

(11) **EP 4 149 784 B1**
(45) Date of publication and mention of the grant of the patent: **24.04.2024**
(21) Application number: 21731831.0
(22) Date of filing: 13.05.2021
(51) Int. Cl.: B60K 17/08, B60K 17/16, F16H 37/08, F16H 48/42, F16H 57/02, F16H 48/30, F16H 48/38

(54) **DIFFERENTIAL UNIT WITH DIFFERENT VELOCITIES**
DIFFERENTIALEINHEIT MIT VERSCHIEDENEN GESCHWINDIGKEITEN
UNITÉ DIFFÉRENTIELLE À VITESSES DIFFÉRENTES

(30) Priority: 13.05.2020 IT 202000010900
(43) Date of publication of application: 22.03.2023
(73) Proprietor: IVECO S.P.A., 10156 Torino (IT)
(72) Inventor: PEREIRA LEMOS, Jose Francivaldo, Sete Lagoas MG (BR)
(74) Representative: Studio Torta S.p.A.
(86) International application number: PCT/IB2021/054103
(87) International publication number: WO 2021/229494

(56) References cited:
- WO-A2-2006/122649
- GB-A- 2 153 024
- US-A- 1 393 208

## Description

### TECHNICAL FIELD

The invention relates to a differential unit, more in particular to a differential group for a heavy vehicle, such as a truck.

### KNOWN STATE OF THE ART

The differential is a power transmission member available in vehicles to distribute the torque coming from an input shaft to a pair of output shafts connected to respective wheels. In particular, as it is known, the differential allows different velocities to be delivered to the wheels, so as to allow each one of them to follow the relative trajectory during paths covering a bend or paths with different grips.

In its simplest configuration, a differential comprises a carrier, to which two shafts are constrained, and two satellites, which are placed on the shafts and mesh with two driven planetary gears, which are integral to the axle shafts, each connected to the respective wheel.

Known differentials are also provided with a locking function, which is configured to cause the two axle shafts to be integral to one another. This function is useful in case of a surface allowing for a reduced grip of the tyres, in which case one of the two wheels, if it were not constrained to the other one, would tend to skid, thus dispersing the torque.

Examples of known differentials are disclosed in publications GB2153024 A, US1393208 A or WO2006122649 A2.

However, known differentials are subjected to a constant need for improvements, so as to ensure a versatile use thereof and increase the functions thereof.

Therefore, existing vehicle differentials need to be improved.

The object of the invention is to fulfil the needs discussed above in an economic fashion.

### SUMMARY OF THE INVENTION

The aforesaid object is reached by a differential group according to claim 1, the dependent claims show further advantageous embodiments of the invention.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- Figure 1 shows a schematic sectional view, with parts removed for greater clarity, of a differential group
   according to the invention in a first operating condition;

- Figure 2 shows a schematic sectional view, with parts removed for greater clarity, of the differential group of figure 1 in a second operating condition;
- Figures 3 and 4 show the differential group of figures 1 and 2, respectively, indicating, by means of arrows, the torque flow according to the invention in the two different operating conditions; and
- Figure 5 shown an axle comprising the differential group according to the invention.

### DETAILED DESCRIPTION OF THE INVENTION

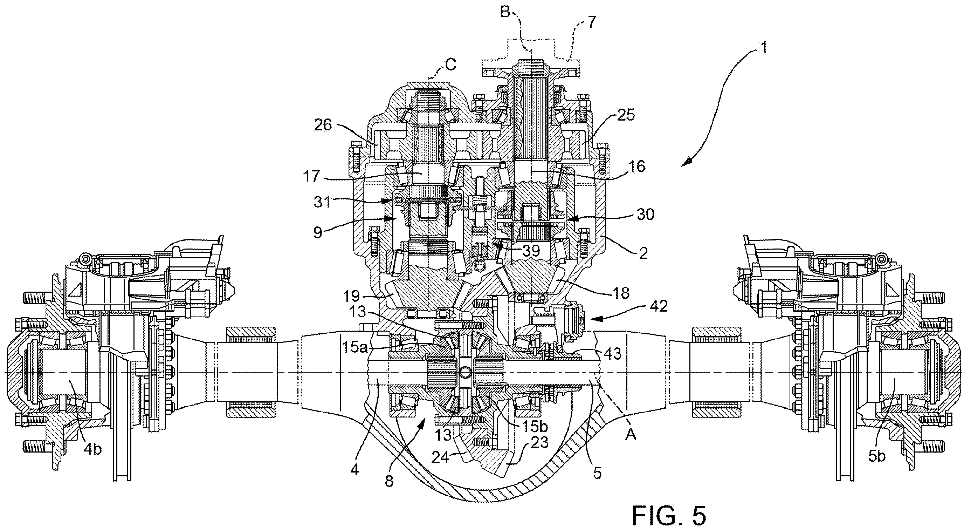

In the accompanying figures, number 1 indicates a differential group 1 according to the invention housed inside a casing 2 configured to delimit an inner space 3 suited for the purpose. The casing 2 further is advantageously configured to house part of the axle shafts 4, 5 of an axle 6, as shown in figure 5. To this aim, the casing 2 can be manufactured as one single piece or in different parts depending on the assembling needs of the differential group 1 and of the axle 6.

The differential group 1 is operatively interposed between the axle shafts 4, 5 and a drive source 7, such as a transmission shaft configured to convey the torque of an internal combustion engine or an electric motor, which is configured to transmit a torque to the axle shafts 4, 5.

The axle shafts 4, 5, as it is known, are advantageously concentric to one another around a common longitudinal axis A, cooperate - with a respective inner end 4a, 5a - with the differential group 1 and define a wheel hub at outer ends 4b, 5b of theirs.

The differential group 1 comprises a differential 8 and a transmission 9, the differential 8 being operatively interposed between the axle shafts 4, 5 and the transmission 9 and the latter being operatively interposed between the differential 8 and the drive source 7.

The differential 8 is known and comprises a carrier 11, which is carried by the casing 3 so as to freely rotate, for example by means of ball bearings 12. According to the embodiment described herein, the carrier 11 is operatively connected to the transmission 9 as described below.

As it is further known, the carrier 11 carries a plurality of satellites 13, for example four satellites, which are angularly equally spaced apart from one another by 90° and are supported by a cross-shaped support 14, which is rigidly carried by the carrier 14 and around whose arms the satellites 13 can rotate. In particular, the satellites rotate on the support 14 around axes contained in a plane, which is perpendicular to the axis A.

The satellites 13 cooperate with a planetary comprising a left bevel gear 15a and a right bevel gear 16b, respectively, which are rigidly carried by the axle shaft 4 and by the axle shaft 5, respectively, on the respective inner portion.

The transmission 9 basically comprises a first and a second shaft 16, 17, which are arranged along respective axes B, C perpendicular to the axis A and, hence, parallel to one another and selectively mesh with the carrier 11 as described below.

Each shaft 16, 17 defines an outer end 16a, 17a and an inner end 16b, 17b, the latter being closer to the differential 8. Each shaft 16, 17 carries a respective gear wheel 18, 19, which is rigidly carried by the inner end 16b, 17b and is configured to mesh with the carrier 11.

In particular, the carrier 11 comprises an annular portion 21, which is coaxial to the axis A, defines the openings configured to allow the axle shafts 4, 5 to be housed and is configured to surround the satellites 13 and the gear wheels 15a, 15b. The carrier 11 further comprises a flange 22 radially extending from the annular portion 21, namely perpendicularly to the axis A towards the transmission 9. The annular portion 21 defines the support for the cross-shaped support 14 and the flange 22, which preferably is separate and fixed to the annular portion 21 and defines, at a radial end of its, a pair of toothings 23, 24, which are configured to mesh with the gear wheels 18, 19 carried by the shafts 16, 17 of the transmission 8.

The toothings 23, 24 are advantageously obtained on axially opposite sides of the flange 22, which extends in an intermediate position between the axes B, C, preferably substantially in the middle between them. Hence, advantageously, the toothings 23, 24 rotate around the axis A, whereas the gear wheels 18, 19 rotate around the axes B, C, thus meshing with one another defining respective bevel gears.

The transmission 9 further comprises a further pair of gear wheels 25, 26, the first one being carried by the first shaft 16 and the second one being carried by the second haft 17 and meshing with one another. Preferably, said gear wheels 25, 26 are rigidly carried by the respective shaft 16, 17 close to the respective outer portion 16a, 17a, hence rotating around the axes B, C defining a cylindrical gear, preferably with straight wheels.

The shafts 16, 17 are supported in a rotary manner on an inner structure 27, which is rigidly connected to the casing 2, for example by means of threaded means. The shafts 16, 17 are supported relative to the inner structure 27 through rolling means 28, such as for example rotary bearings, preferably with conical rollers and, in the case described herein, arranged so as form an "X".

Advantageously, each shaft 16, 17 is divided into two portions 16', 16'', 17', 17'', which can selectively be connected to one another and are advantageously coaxial to one another along the respective axis B, C. In particular, each shaft 16, 17 defines an inner portion 16', 17' defining the inner end 16a, 17a carrying the respective gear wheel 23, 24 and an outer portion 16'', 17'' defining the outer end 16b, 17b carrying the respective gear wheel 25, 26.

The portions 16', 16'', 17', 17'' are configured to selectively cooperate by means of a respective clutch 30, 31, which can slide along the axes B, C and is configured to define, for each shaft 16, 17, a first operating condition, in which the two portions 16', 16'', 17', 17'' are engaged and, hence, are coupled to one another in a rotary manner, and a second operating condition, in which the two portions 16', 16'', 17', 17'' are disengaged and, hence, are free to rotate independently of one another. Advantageously, when the portions 16', 16'' of the first shaft 16 are engaged, the portions 17', 17'' of the second shaft 17 are free to rotate relative to one another.

In particular, each toothed clutch 30, 31 comprises a fixed portion 30', 31', which is fixed relative to the respective shaft 16, 17 and is configured to cooperate, through a shape coupling, with a movable portion 30", 31", which is movable along the respective axis B, C along the relative shaft 16, 17. In particular, the shape coupling is configured to couple the two portions 16', 16'', 17', 17'' in their rotation and preferably is a toothed coupling.

The movable portions 30'', 31" are connected to one another so that their translation along the axes B, C is the same. Advantageously, the movable portions 30'', 31" slide on the respective shaft 16, 17 by means of a grooved coupling 33.

Furthermore, according to the advantageous embodiment described herein, the fixed portion 30' fixed to the first shaft 16 is placed at the bottom along the axes B, C relative to the fixed portion 31' fixed to the second shaft 17 and, vice versa, the movable portion 31"movable on the second shaft 16 is placed at the bottom along the axes B, C relative to the fixed portion 30" fixed to the second shaft 17. In this way, the concordant movement of the two movable portions 30", 31" allows for the coupling between the portions 16', 16'', 17', 17" ' of single shaft 16, 17 alternatively to other one.

Advantageously, the two movable portions are connected to one another by means of a coupling element 34, advantageously a disc, which is carried, so as to freely rotate parallel to the axes B, C, by the inner structure 27 and is configured to cooperate in contact with axial walls of respective annular seats 35, 36 obtained in the movable portions 30", 31".

The coupling element 34 is advantageously carried by a pin 37, which is fixed to the inner structure 27 so as to freely slide. Owing to the above, the pin 37 extends parallel to the axes B, C so as to allow for the coupling movement 34 along them. Optionally, the latter can further rotate on the pin 37.

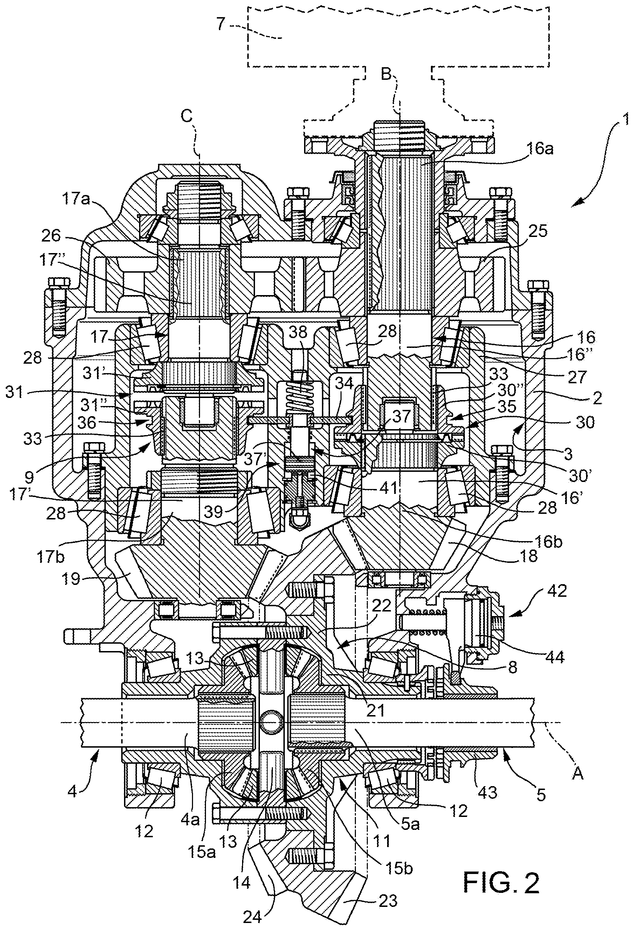

The coupling element 34 is held in a first operating position by means of a force operated by elastic means 38, for example a helical spring wound around the pin 37, which are interposed between the inner structure 27 and the coupling element 34. In the example described herein, the elastic means 38 hold the coupling element 34 in the operating position shown in figure 2.

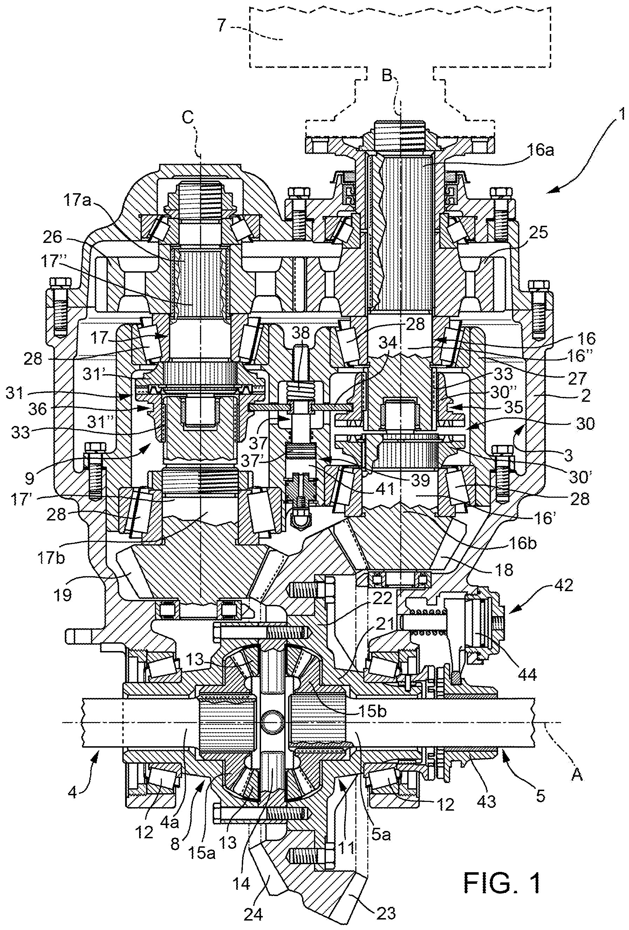

The coupling element 34 is moved along the pin 37 thanks to actuator means 39, which are configured to overcome the force exerted by the elastic means 38 and move the coupling element between the first and a second operating position, which are shown in figures 2 and 1.

Advantageously, the actuator means 39 comprise a pneumatic thrust system. Advantageously, said pneumatic thrust system comprises a chamber 41, where an end portion 37' of the pin 37 is housed so as to slide in the chamber 41 in a sealing manner. The chamber 41 is fluidically connected to a source of air under pressure, so as to be selectively filled with or emptied from said air under pressure.

The end portion 37' can slide in a sealing manner in the chamber 41 depending on the force balance between the thrust provided by the elastic means 38 to the pin 37 and the pressure of the air in the chamber 41 exerted on the pin 37 by means of the portion 37'.

The differential group 1 can further comprise blocking means 42, which are configured to lock the differential 8, namely make the carrier 11 integral to the axle shaft 5.

In particular, the blocking means 42 comprise a sleeve 43, which is carried close to one of the openings of the annular portion 21 of the carrier 11. In the embodiment described herein, the sleeve 43 is housed, in a sliding manner, coaxially to the right axle shaft 5 and is configured to define a selective coupling with the carrier 11, by means, for example, of a shape coupling, preferably a toothed one, between itself and the annular portion 21 of the carrier 21.

Hence, the sleeve 43 is configured to operatively assume a first position, in which it is free relative to the axle shaft 5 and to the carrier 11, and a second condition, in which it cooperates in contact, through the shape coupling, with the carrier 11, thus making it integral to the axle shaft 5 and, hence, allowing the velocity coming from the drive shaft 4 to be equally divided between the axle shafts 5, 6, basically cancelling the differential function.

The sleeve 43 is operated by means of an actuator means, for example a pneumatic one, preferably similar to the actuator means 39 and, hence, comprising a chamber 44 in which a piston is free to slide in a sealing manner. The chamber 44 is fluidically connected to a source of air under pressure, so as to be selectively filled with or emptied from said air under pressure. The piston is held in a rest position by elastic means, which are configured to exert, upon the piston, a force that is contrary to the one exerted by the pressure in the chamber 44 upon the piston itself.

The latter, hence, can slide in a sealing manner in the chamber 44 depending on the force balance between the thrust provided by the elastic means and the pressure of the air in the chamber 44 exerted on it.

The piston is further connected to the sleeve 43 so that, when there is no air inside the chamber 44, it allows the sleeve 43 to be free relative to the axle shaft 5 and to the carrier 11, whereas, when there is air under pressure in the chamber 44, the thrust provided by the elastic means acting upon the piston is overcome, so that the latter moves, coupling the sleeve 43 to the carrier 11 and making it integral to the casing 2.

The differential group 1 further comprises several functional elements, such as anti-dust rings, spacers, o-rings, threaded elements, splines or bearings configured to allow a correct assembly and operation of the structure schematically disclosed above, which are not discussed in detail for the sake of brevity.

The embodiment of the differential group 1 described above works as follows.

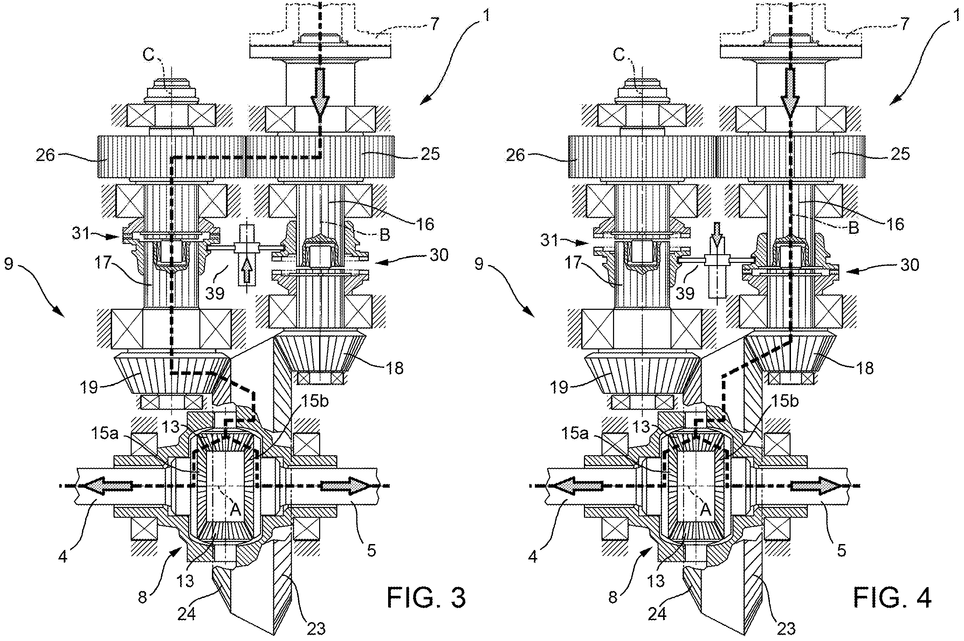

In a first operating condition, which is shown in figure 3, the actuator means 39 control the movement of the coupling element 34 so that the clutch 31 is coupled to the shaft 17 in a rotary manner and, hence, sets free the two portions 16', 16'' of the shaft 16. In particular, compressed air is introduced into the chamber 41, thus exerting a force upon the end portion 37' of the pin 37 that is such as to move the latter against the force exerted by the elastic means 38. The coupling element 34, for it is coupled to the moveable portion 31'' of the clutch 31, causes it to mesh with the fixed portion 31' thereof and, at the same time, moves the movable portion 30'' of the clutch 30' away from the respective fixed portion 30'. In this way, the two portions 17', 17'' of the second shaft 17 are integral to one another in their rotation, whereas the portions 16', 16'' freely rotate relative to one another.

In this way, the torque provided by the drive source 7 is transmitted to the outer portion 16" of the first haft 16, hence to the gear wheel 25, which, by meshing with the gear wheel 26, transfers said torque to the entire second shaft 17, since the two portions 17', 17'' are connected to one another, and then to the gear wheel 19, which, by meshing with the toothing 24, transmits the torque to the carrier according to a transmission ratio that is predefined relative to the torque delivered by the drive source and is equal to the multiplication between the ratios between two gear wheels 25, 26 and 19, 24.

Assuming that one starts from the condition of figure 3 and wants to shift to a second operating condition, which is shown in figure 4, the actuator means 39 do not exert a force upon the coupling element 34, so that the clutch 30 is coupled to the shaft 16 in a rotary manner and, hence, sets the two portions 17', 17'' of the shaft 17 free. In particular, the air contained in the chamber 41 is caused to flow out, thus stopping exerting a force upon the end portion 37' of the pin 37, which moves due to the action of the force exerted by the elastic means 38. The coupling element 34, for it is coupled to the moveable portion 30'' of the clutch 30, causes it to mesh with the fixed portion 30' thereof and, at the same time, moves the movable portion 31" of the clutch 31' away from the respective fixed portion 31. In this way, the two portions 16', 16"' of the second shaft 16 are integral to one another in their rotation, whereas the portions 17', 17" freely rotate relative to one another.

By so doing, the torque delivered by the drive source 7 is transmitted to the outer portion 16" of the first shaft 16, then to the inner portion 16' and to the gear wheel 18, which, by meshing with the toothing 23, transfers the torque to the carrier according to a transmission ratio that is predefined relative to the torque delivered by the drive source and is equal ratio between two gear wheels 18 and 23.

The transmission ratios in the two operating conditions of figures 3 and 4 are such that the condition of figure 4 is advantageously dedicated to a low-velocity gear, where a greater torque needs to be delivered to the axle shafts 4, 5, whereas the condition of figure 3 is advantageously dedicated to a high-velocity gear, where a smaller torque needs to be delivered to the axle shafts 4, 5. Hence, the transmission ratio between the input torque of the differential group 1 and the torque delivered to the axle shafts 4, 5 is greater in the condition of figure 3 than in figure 4.

The operation of the actuator means 39 can be controlled by means of an electronic control unit (not shown), for example the ECU of the vehicle, which is configured to allow compressed air to flow into and out of the chamber 41.

In the operating conditions of figures 3 and 4, the blocking means 42 are configured in such a way that the sleeve 43 is free relative to the axle shaft 5 and to the carrier 11. If the differential 8 needs to be locked, it is sufficient to control the blocking means 42 so that they couple the sleeve 43 to the carrier 11. In the case described herein, air just needs to be let into the chamber 44 so as to overcome the resistance of the elastic means holding the sleeve 43 in the configuration of figures 3 and 4, thus moving the latter so that it is coupled to the carrier 11, thus making it integral to the casing 2.

Owing to the above, the advantages of a differential group 1 according to the invention are evident.

In particular, the differential group 1 allows for two possible transmission ratios between the drive source 7 and the differential 8, thus increasing the versatility of the driving system of the heavy vehicle. In this way, it is possible to provide a versatile differential group for different types of driving styles and loads of the vehicle.

Furthermore, the differential group 1 is particularly compact thanks to the specific arrangement of the two shafts 16, 17 parallel to one another and to the actuator means 39 housed between them and configured to allow for the alternative selection thereof.

In this way, contaminations from the outside can be avoided, thus increasing the useful life of the differential group.

Finally, the differential group 1 according to the invention can be subjected to changes and variants, which, though, do not go beyond the scope of protection set forth in the appended claims.

For example, it is clear that the actuator means 39 can be of a different type, for example they can be mechanical, hydraulic or electromagnetic actuator means, just like the blocking means 42.

Furthermore, the pairs of gears wheels 25 and 26, 19 and 24, 18 and 23 can be of any type and dimension.

Similarly, the shape of the structure 2, of the support 27 or of the axle 6 can change depending on the type of vehicle, just like the elements of the differential 8.

## Claims

1. Differential group (1) for a heavy vehicle, said differential group (1) comprising a casing (2) defining a space (3), a differential (8) and a transmission (9) housed inside said space (3),
said differential (8) being configured to divide an input torque from a drive source (7) to said differential group (1) to a torque of axle shafts (4, 5) of said vehicle coaxial around an axis (A),
said transmission (9) being operatively interposed between said drive source (7) and said differential (8) and comprising a first and a second shaft (16, 17) extending along respective axes (B, C) parallel to each other and perpendicular to said axis (A) of said axle shafts (4, 5) and being supported rotationally free with respect to said casing (2),
**characterized in that** said shafts (16, 17) each comprising a first portion (16', 17') and a second portion (16", 17"),
each shaft (16, 17) comprising a first toothed wheel (25, 26) rigidly carried by the respective first portion (16 ', 17') and a second toothed wheel (18, 19) rigidly carried by the respective second portion (16", 17"),
said first gear wheels (25, 26) meshing with each other according to a predefined transmission ratio and said second gear wheels each meshing with a respective toothing (23, 24) made on a carrier (11) of said differential (8) according to respective transmission reports,
said first and second portions (16', 16", 17', 17") of said shafts (16', 17) being selectively alternately connectable to each other to allow the torque supplied by said driving source (7) to pass to said differential (8) according to a different transmission ratio.

2. Differential group according to claim 1, wherein said first and second portions (16', 16", 17', 17") of said shafts (16', 17) can be selectively alternatively connectable to each other through a respective clutch (30, 31) configured to slide along the respective axis (B, C), each clutch (30, 31) being controlled by a respective actuator means (39).

3. Differential group according to claim 2, in which each coupling (30, 31) comprises a shape coupling configured to rotationally couple the respective first and second portions (16', 16", 17', 17").

4. Differential group according to claim 2 or 3, wherein each clutch (30, 31) is a toothed clutch.

5. Differential group according to one of claims 2 to 4, wherein each clutch (30, 31) comprises a fixed portion (30', 31') connected to one of said first and second portion (16', 16", 17', 17") and a mobile portion (31", 31") sliding along the respective axis (B, C) on another of said first and second portions (16', 16", 17', 17"), said mobile portion (30', 31') being configured to couple in rotation with said fixed portion (30', 31').

6. Differential group according to claim 5, wherein said actuator means (39) controls said movable portions (30", 31") so that they slide in the same module but in the opposite direction along the respective axis (B, C ).

7. Differential group according to claims 5 or 6, wherein said movable portions (30", 31") are coupled to the translation by a connection element (34), the movement of said connection element (34) being controlled by said actuator means (39).

8. Differential group according to claim 7, comprising elastic means (38) configured to exert a force on said connection element (34) so as to maintain it in a predetermined connection position for said first and second portions (16', 16", 17', 17").

9. Differential group according to one of claims 2 to 8, wherein said actuator means (39) is a pneumatic actuator.

10. Differential group according to claim 9 when dependent on 8, wherein said pneumatic type actuator means (39) is configured to exert a force contrary to that exerted by elastic means (38).

11. Differential group according to one of the preceding claims, wherein said carrier (11) comprises an annular portion (21) surrounding part of said axle shafts (4, 5) and a flange (22) extending radially from said annular portion (21) , said toothings (23, 24) being made from axially opposite parts of said flange (21).

12. Differential group according to claim 11, wherein said flange (21) is placed in an intermediate position with respect to said axes (B, C) of said shafts (16, 17).

13. Differential group according to one of the preceding claims, comprising locking means (42) configured to lock the function of said differential (8).

14. Vehicle axle (6) comprises a first and a second axle shaft (4, 5) and a differential group (1) configured to connect said axle shafts (4, 5) to a driving source (7) of said vehicle, said differential group (1) being made according to one of the preceding claims.

## Patentansprüche

1. Differentialgruppe (1) für ein Schwerlastfahrzeug, welche Differentialgruppe (1) ein Gehäuse (2) umfasst, das einen Raum (3) begrenzt, sowie ein Differential (8) und ein Getriebe (9), das in dem Raum (3) aufgenommen ist,
welches Differential (8) dazu ausgebildet ist, ein von einer Antriebsquelle (7) zur Differentialgruppe (1) übertragenes Eingangsdrehmoment in ein Drehmoment von Achswellen (4, 5) des Fahrzeugs aufzuteilen, die koaxial um eine Achse (A) laufen,
und wobei das Getriebe (9) zwischen der Antriebsquelle (7) und dem Differential (8) wirkend angeordnet ist und eine erste und eine zweite Welle (16, 17) umfasst, die sich entlang jeweiliger Achsen (B, C) parallel zueinander und senkrecht zur Achse (A) der Achswellen (4, 5) erstrecken und frei drehbar in Bezug auf das Gehäuse (2) gelagert sind,
**dadurch gekennzeichnet, dass** die Wellen (16, 17) jeweils einen ersten Abschnitt (16', 17') und einen zweiten Abschnitt (16", 17") umfassen,
und jede Welle (16, 17) ein erstes Zahnrad (25, 26), das starr durch den jeweiligen ersten Abschnitt (16', 17') getragen wird, und ein zweites Zahnrad (18, 19), das starr durch den jeweiligen zweiten Abschnitt (16', 17') getragen wird, umfasst,
wobei die ersten Zahnräder (25, 26) einander mit einem vorbestimmten Übersetzungsverhältnis kämmen und die zweiten Zahnräder jeweils eine entsprechende Zahnung (23, 24), die auf einem Träger (11) des Differentials (8) ausgebildet ist, gemäß jeweiligen Übersetzungsverhältnissen kämmen,
wobei die ersten und zweiten Abschnitte (16', 16", 17', 17") der Wellen (16', 17) selektiv wechselweise miteinander zu verbinden sind, derart, dass das von der Antriebsquelle (7) übertragene Drehmoment das Differential (8) gemäß unterschiedlichen Übersetzungsverhältnissen passieren kann.

2. Differentialgruppe gemäß Anspruch 1, bei welcher die ersten und zweiten Abschnitte (16', 16", 17', 17") der Wellen (16', 17) wahlweise selektiv miteinander durch eine entsprechende Kupplung (30, 31) verbindbar sind, die zum Gleiten entlang der jeweiligen Achse (B, C) ausgebildet ist, wobei jede Kupplung (30, 31) durch ein entsprechendes Betätigungsmittel (39) gesteuert wird.

3. Differentialgruppe gemäß Anspruch 2, bei welcher jede Kupplung (30, 31) eine Formkupplung umfasst, ausgebildet, um die jeweiligen ersten und zweiten Abschnitte (16', 16", 17',17") drehend zu kuppeln.

4. Differentialgruppe gemäß Anspruch 2 oder 3, wobei jede Kupplung (30, 31) eine gezahnte Kupplung ist.

5. Differentialgruppe gemäß einem der Ansprüche 2 bis 4, bei welchem jede Kupplung (30, 31) einen feststehenden Teil (30', 31') umfasst, der mit einem der ersten und zweiten Abschnitte (16', 16", 17', 17") verbunden ist, und einen beweglichen Teil (31", 31"), der entlang der jeweiligen Achse (B, C) auf dem anderen der ersten und zweiten Abschnitte (16', 16", 17', 17") gleitet, wobei der bewegliche Teil (30', 31') dazu ausgebildet ist, in Drehung mit dem feststehenden Teil (30', 31') zu kuppeln.

6. Differentialgruppe gemäß Anspruch 5, bei welcher das Betätigungsmittel (39) die beweglichen Teile (30", 31") derart steuert, dass diese in dem gleichen Modul, jedoch in entgegengesetzten Richtungen entlang der jeweiligen Achse (B, C) gleiten.

7. Differentialgruppe gemäß Anspruch 5 oder 6, bei welchem die beweglichen Teile (30", 31") mit der Übersetzung durch ein Verbindungselement (34) gekoppelt sind, wobei die Bewegung des Verbindungselement (34) durch das Betätigungsmittel (39) gesteuert werden.

8. Differentialgruppe gemäß Anspruch 7, umfassend elastische Mittel (38), ausgebildet zur Ausübung einer Kraft auf das Verbindungselement (34), um dieses in einer vorbestimmten Verbindungsposition für die ersten und zweiten Abschnitte (16', 16", 17', 17") zu halten.

9. Differentialgruppe gemäß einem der Ansprüche 2 bis 8, bei welcher das Betätigungsmittel (39) ein pneumatisches Betätigungselement ist.

10. Differentialgruppe gemäß Anspruch 9, falls abhängig von Anspruch 8, bei welchem das Betätigungsmittel (39) vom pneumatischen Typ dazu ausgebildet ist, eine Kraft entgegen derjenigen auszuüben, die durch das elastische Mittel (38) ausgeübt wird.

11. Differentialgruppe gemäß einem der vorhergehenden Ansprüche, bei welchem der Träger (11) einen ringförmigen Teil (21) umfasst, der einen Teil der Achswellen (4, 5) umgibt, und einen Flansch (22), der sich radial von dem ringförmigen Teil (21) aus erstreckt, wobei die Zahnungen (23, 24) von axial gegenüberliegenden Teilen des Flansches (21) gebildet werden.

12. Differentialgruppe gemäß Anspruch 11, bei welcher der Flansch (21) in einer mittleren Position bezüglich der Achsen (B, C) der Wellen (16, 17) angeordnet ist.

13. Differentialgruppe gemäß einem der vorhergehenden Ansprüche, umfassend Blockiermittel (42), ausgebildet zum Blockieren der Funktion des Differentials (8).

14. Vertikale Achse (6), die eine erste und eine zweite Achswelle (4, 5) und eine Differentialgruppe (1) umfasst, ausgebildet zum Verbinden der Achswellen (4, 5) mit einer Antriebsquelle (7) des Fahrzeugs, wobei die Differentialgruppe (1) gemäß einem der vorhergehenden Ansprüche ausgebildet ist.

## Revendications

1. Groupe différentiel (1) pour un véhicule lourd, ledit groupe différentiel (1) comprenant un boîtier (2) définissant un espace (3), un différentiel (8) et une transmission (9) logée à l'intérieur dudit espace (3),
ledit différentiel (8) étant configuré pour diviser un couple d'entrée à partir d'une source d'entraînement (7) jusqu'audit groupe différentiel (1) en un couple d'arbres de roues (4, 5) dudit véhicule coaxiaux autour d'un axe (A),
ladite transmission (9) étant interposée fonctionnellement entre ladite source d'entraînement (7) et ledit différentiel (8) et comprenant un premier et un second arbre (16, 17) s'étendant le long d'axes (B, C) respectifs parallèles l'un à l'autre et perpendiculaires audit axe (A) desdits arbres de roues (4, 5) et étant supportée libre de manière rotative par rapport audit boîtier (2),
**caractérisé en ce que** lesdits arbres (16, 17) comprennent chacun une première portion (16', 17') et une seconde portion (16", 17"),
chaque arbre (16, 17) comprenant une première roue (25, 26) dentée portée de manière rigide par la première portion (16', 17') respective et une seconde roue dentée (18, 19) portée de manière rigide par la seconde portion (16", 17") respective,
lesdites premières roues (25, 26) d'engrenage s'engrenant l'une avec l'autre conformément à un ratio de transmission prédéfini et lesdites secondes roues d'engrenage s'engrenant chacune avec une denture (23, 24) respective réalisée sur un support (11) dudit différentiel (8) conformément à des rapports de transmission respectifs,
lesdites première et seconde portions (16', 16'', 17',17") desdits arbres (16', 17) étant raccordables alternativement les unes aux autres de manière sélective pour permettre au couple fourni par ladite source d'entraînement (7) de passer audit différentiel (8) conformément à un ratio de transmission différent.

2. Groupe différentiel selon la revendication 1, dans lequel lesdites première et seconde portions (16', 16", 17', 17") desdits arbres (16', 17) peuvent être raccordables alternativement les unes aux autres de manière sélective par le biais d'un embrayage (30, 31) respectif configuré pour coulisser le long de l'axe (B, C) respectif, chaque embrayage (30, 31) étant commandé par un moyen actionneur (39) respectif.

3. Groupe différentiel selon la revendication 2, dans lequel chaque coupleur (30, 31) comprend un coupleur de forme configuré pour accoupler de manière rotative les première et seconde portions (16', 16'', 17', 17") respectives.

4. Groupe différentiel selon la revendication 2 ou 3, dans lequel chaque embrayage (30, 31) est un embrayage à dents.

5. Groupe différentiel selon l'une des revendications 2 à 4, dans lequel chaque embrayage (30, 31) comprend une portion fixe (30', 31') raccordée à l'une desdites première et seconde portions (16', 16", 17', 17") et une portion mobile (31", 31") coulissant le long de l'axe (B, C) respectif sur une autre desdites première et seconde portions (16', 16", 17', 17"), ladite portion mobile (30', 31') étant configurée pour s'accoupler en rotation à ladite portion fixe (30', 31').

6. Groupe différentiel selon la revendication 5, dans lequel ledit moyen actionneur (39) commande lesdites portions mobiles (30", 31") de manière à ce qu'elles coulissent dans le même module mais dans la direction opposée le long de l'axe (B, C) respectif.

7. Groupe différentiel selon les revendications 5 ou 6, dans lequel lesdites portions mobiles (30", 31") sont accouplées à la translation par un élément de raccordement (34), le déplacement dudit élément de raccordement (34) étant commandé par ledit moyen actionneur (39).

8. Groupe différentiel selon la revendication 7, comprenant des moyens élastiques (38) configurés pour exercer une force sur ledit élément de raccordement (34) de manière à le maintenir dans une position de raccordement prédéterminée pour lesdites première et seconde portions (16', 16", 17', 17").

9. Groupe différentiel selon l'une des revendications 2 à 8, dans lequel ledit moyen actionneur (39) est un actionneur pneumatique.

10. Groupe différentiel selon la revendication 9 lorsqu'elle dépend de la revendication 8, dans lequel ledit moyen actionneur (39) de type pneumatique est configuré pour exercer une force contraire à celle exercée par les moyens élastiques (38).

11. Groupe différentiel selon l'une des revendications précédentes, dans lequel ledit support (11) comprend une portion annulaire (21) entourant une partie desdits arbres de roues (4, 5) et un collet (22) s'étendant radialement à partir de ladite portion annulaire (21), lesdites dentures (23, 24) étant réalisées à partir de parties opposées axialement dudit collet (21).

12. Groupe différentiel selon la revendication 11, dans lequel ledit collet (21) est placé dans une position intermédiaire par rapport audits axes (B, C) desdits arbres (16, 17).

13. Groupe différentiel selon l'une des revendications précédentes, comprenant des moyens de verrouillage (42) configurés pour verrouiller la fonction dudit différentiel (8).

14. Essieu de véhicule (6) comprenant un premier et un second arbre de roues (4, 5) et un groupe différentiel (1) configuré pour raccorder lesdits arbres de roues (4, 5) à une source d'entraînement (7) dudit véhicule, ledit groupe différentiel (1) étant réalisé selon l'une des revendications précédentes.
